# EUROPÄISCHE PATENTSCHRIFT

(11) **EP 3 750 632 B1**
(45) Veröffentlichungstag und Bekanntmachung des Hinweises auf die Patenterteilung: **20.10.2021**
(21) Anmeldenummer: 20177538.4
(22) Anmeldetag: 29.05.2020
(51) Int. Cl.: B02C 21/02, B02C 23/02, B07B 1/00

(54) **AUFGABEEINHEIT FÜR EINE AUFBEREITUNGSANLAGE, INSBESONDERE EINE BRECH- ODER SIEBANLAGE**
FEED UNIT FOR A TREATMENT PLANT, IN PARTICULAR A CRUSHING OR SCREENING PLANT
UNITÉ DE DISTRIBUTION POUR UNE INSTALLATION DE TRAITEMENT, EN PARTICULIER UNE INSTALLATION DE BROYAGE OU DE CRIBLAGE

(30) Priorität: 11.06.2019 DE 102019115871
(43) Veröffentlichungstag der Anmeldung: 16.12.2020
(73) Patentinhaber: KLEEMANN GMBH, 73037 Göppingen (DE)
(72) Erfinder: KÖPF, Reiner, 73333 Gingen an der Fils (DE); KNOBLICH, Christian, 70178 Stuttgart (DE); SCHMID, Wolfgang, 73089 Rechberghausen (DE)
(74) Vertreter: Herrmann, Jochen

(56) Entgegenhaltungen:
- EP-A2- 1 484 113
- DE-A1-102017 112 091

## Beschreibung

Die Erfindung betrifft eine Aufgabeeinheit für eine Aufbereitungsanlage, insbesondere für eine Brech- oder Siebanlage, mit einer Aufgaberinne, die einen Rinnenträger aufweist, wobei der Rinnenträger einen Boden aufweist, wobei sich der Boden in Förderrichtung der Aufgaberinne erstreckt, wobei im Bereich der Unterseite des Bodens wenigstens ein sich in Förderrichtung erstreckender Träger angeordnet ist, der den Boden abstützt, wobei weiterhin ein Halter vorgesehen ist, der zumindest einen Schwingungserreger trägt, und wobei der Halter an den Träger angeschlossen ist.

Aufbereitungsanlagen werden zu verschiedenen Zwecken eingesetzt. Sie dienen beispielsweise zum Zerkleinern und/oder Aussieben von Recycling- und/oder Gesteinsmaterial im Aufbereitungsprozess. Diese Maschinen lassen sich entweder als mobile oder als stationäre Anlagen einsetzen. Über eine Aufgabeeinheit wird das zu brechende Gut in die Anlage eingefüllt. Hierzu werden üblicherweise Bagger eingesetzt. Der Bagger legt das zu brechende Gut in einer Förderrinne der Aufgabeeinheit ab. Ausgehend von der Aufgabeeinheit wird das zu zerkleinernde Material mit einer Fördereinrichtung in Förderrichtung zu einer Sieb- oder Brecheinheit gefördert. Die Fördereinrichtung bewirkt dabei den Transport mittels motorisch angetriebenen Schwingungserregern. Beispielsweise werden Exzenter-Schwinger eingesetzt. Diese Exzenter-Schwinger sind an einen Träger angeschlossen, der mit dem Rinnenträger der Aufgabeeinheit in Verbindung steht. Die Schwingungserreger versetzen die Aufgaberinne über den Träger derart in Schwingung, dass eine Förderwirkung in Förderrichtung, hin zu einer nachfolgenden Prozesseinheit, beispielsweise einer Siebeinheit, erzielt wird.

Eine derartige Anlage ist aus der DE 10 2017 112 091 A1 bekannt.

EP 1 484 113 A2 offenbart einen mobilen Backenbrecher zum Brechen von Beton und Asphalt. Der Backenbrecher weist ein Brechaggregat mit zwei gegeneinander verstellbaren Brechbacken auf. Zu brechendes Material kann über eine Vorschubeinheit in Richtung der Brechbacken gefördert werden.

Das auf der Aufgaberinne abgelegte Gut hat ein hohes Gewicht. Aufgrund dieses Gewichts und der von dem Schwingungserreger induzierten Schwingung wirken sehr hohe Belastungen auf den Rinnenträger ein. Um diese Belastungen zu reduzieren, empfiehlt es sich das Gewicht der bewegten Teile der Aufgabeeinheit so gering wie möglich zu halten. Dem laufen dann jedoch die Anforderungen entgegen, eine stabile Konstruktion zu bieten, welche den auftretenden Belastungen ausreichend standhält.

Es ist Aufgabe der Erfindung, eine Aufgabeeinheit der eingangs erwähnten Art bereitzustellen, welche hohen Belastungen im Dauerbetrieb zuverlässig standhält.

Diese Aufgabe wird dadurch gelöst, dass der Träger ein geschlossenes Hohlprofil bildet oder wenigstens ein Wandabschnitt des Trägers zusammen mit einem daran angeschlossenen Verstärkungsprofil ein geschlossenes Hohlprofil bildet, und dass sich das Hohlprofil mit einer Winkelabweichung im Bereich von +/-15° in Richtung der Erregungsrichtung. erstreckt.

Das Hohlprofil steift den Träger aus, so dass er dabei insbesondere ein hohes axiales Widerstandsmoment gegen Biegung aufweist und widerstandsfähig (hohes polares Widerstandsmoment) gegen Torsionsbeanspruchungen ist. Zudem vergrößert sich die wirksame Fläche zur Übertragung von Zug- und Druckkräften zwischen dem Schwingungserreger und der Aufgaberinne. Erfindungsgemäß wird mithin eine stabile Kastenstruktur gebildet, die auch hohen Belastungen zuverlässig widersteht und die dabei zudem auch ein geringes Bauteilgewicht aufweist. Erfindungsgemäß ist es weiterhin vorgesehen, dass sich das Hohlprofil mit einer Winkelabweichung im Bereich von +/-15° in Richtung der Erregungsrichtung. erstreckt. Die von der Erregungseinrichtung erzeugten Kräfte werden dementsprechend in Richtung der Längserstreckung oder im Wesentlichen in Richtung der Längserstreckung des Hohlprofils in dieses eingebracht. Dies hat den Effekt, dass quer zur Längserstreckung wirkende und entsprechend nachteilige Spannungen verhindert oder minimiert werden. Über diese Maßnahme verringern sich auch die elastischen Deformationen des Trägers während des Schwingungsbetriebs auf ein Minimum. Hierdurch wird dann auch weniger Erregungsenergie vernichtet, sodass sich ein höherer Wirkungsgrad erreichen lässt.

Gemäß einer bevorzugten Ausgestaltungsvariante der Erfindung kann es vorgesehen sein, dass das Hohlprofil an seinen längsseiteigen Enden jeweils einen Endabschnitt aufweist, und dass das Hohlprofil mit seinem ersten Endabschnitt mit dem Boden und mit seinem zweiten Endabschnitt mit dem Halter verbunden ist. Auf diese Weise lässt sich die von dem Schwingungserreger erzeugte Kraft unmittelbar in das Hohlprofil und den Träger einleiten und in den Rinnenträger übertragen. Hierdurch wird eine besonders stabile Konstruktion geschaffen. Eine stabile Verbindung der Endabschnitte mit dem Boden des Rinnenträgers und dem Halter kann beispielsweise und bevorzugt über eine Schweißverbindung erfolgen.

Erfindungsgemäß kann es insbesondere auch vorgesehen sein, dass das Hohlprofil in einem Winkel kleiner 90° zu der Förderrichtung bzw. zu dem Boden verläuft, wobei der Winkel insbesondere als spitzer Winkel im Bereich zwischen 20° und 50°, besonders bevorzugt im Bereich zwischen 25° und 35°, insbesondere 30° ausgebildet ist. Hierdurch wird in vorteilhafter Weise erreicht, dass das Profil im Wesentlichen in der Wirklinie der Erregungskraft liegt. Damit werden keine unerwünschten Momente in der Struktur erzeugt.

Wenn die Erfindung dergestalt ist, dass im Bereich des dem Halter zugekehrten Endabschnitts des Hohlprofils wenigstens ein Aussteifungselement angeordnet ist, wobei das Aussteifungselement sowohl mit der Außenseite des Hohlprofils als auch mit dem Halter verbunden ist, und dass das Aussteifungselement zumindest bereichsweise seitlich über den Außenumfang des Hohlprofils vorsteht, dann wird der besonders belastete Verbindungsbereich zwischen dem Halter und dem Träger bzw. dem Hohlprofil zusätzlich ausgesteift, Steifigkeitssprünge vermieden und damit die Gefahr eines Ermüdungsbruchs in diesem Bereich reduziert.

Erfindungsgemäß kann es auch vorgesehen sein, dass der Träger ein Wandelement aufweist, an das zwei Distanzstücke des Hohlprofils anschließen, und dass die Distanzstücke einen Profilabschnitt des Hohlprofils beabstandet zu dem Wandelement halten. Mit dieser Bauweise ergibt sich eine kastenartige Struktur, bei der der Profilabschnitt über die beiden Distanzstücke im Abstand zu dem Träger gehalten wird. Über diese Beabstandung werden eine besonders hohe Torsionssteifigkeit und ein hohes axiales Widerstandsmoment gegen Biegung mit geringem Teileaufwand erreicht.

Dabei kann es insbesondere vorgesehen sein, dass die zwei Distanzstücke und der Profilabschnitt (gegebenenfalls mit weiteren Profilbereichen) ein einheitliches Verstärkungsprofil bilden, welches dann mit dem Wandelement des Trägers verbunden, vorzugsweise verschweißt wird. Hierdurch ergibt sich mit geringem Bauteilgewicht eine stabile Konstruktion. Dieses Profilteil kann dabei insbesondere auch einteilig aus einem Stanz-Biegeteil gebildet sein. Denkbar ist es jedoch auch, dass dieses Profilteil aus mehreren Einzelteilen zusammengesetzt ist, die miteinander verbunden sind.

Denkbar ist es jedoch auch, dass ein geschlossenes Hohlprofil mit zwei Distanzstücken und einem Profilabschnitt gebildet wird, wobei dieses Hohlprofil einen zusätzlichen Profilabschnitt aufweist, der dann mit dem Wandelement des Trägers verbunden werden kann. Ein solches geschlossenes Hohlprofil kann dann als vorgefertigte Baueinheit auf das Wandelement des Trägers aufgesetzt und mit diesem verbunden, vorzugsweise verschweißt werden.

Wenn vorgesehen ist, dass das Wandelement und/oder der Profilabschnitt eine Einmuldung aufweist/-en, die vorzugsweise in Richtung auf den von dem Hohlprofil umschlossenen Innenraum hin eingetieft ist, dann wird eine weitere Aussteifung des Hohlprofils zu Gunsten einer höheren Belastbarkeit möglich. Wenn die Einmuldung zum Innenraum hin eingetieft wird, dann ergibt sich eine platzsparende Bauweise. Selbstverständlich ist es auch möglich, die Einmuldung zur Außenseite des Hohlprofils hin auszubuchten.

Denkbar ist es insbesondere, dass an die beiden Distanzstücke jeweils ein Wandelement angeschlossen ist, wobei die beiden Wandelemente zueinander im Winkel größer 90° stehen. Über die beiden zueinander im Winkel stehenden Wandelemente wird auf einfache Weise eine Vergrößerung der Baubreite des Hohlprofils quer zur Förderrichtung erreicht. Hierdurch wird eine Erhöhung der Biegesteifigkeit, bei Biegung um eine Achse senkrecht zur Förderrichtung geschaffen und gleichzeitig dabei auf einfache Weise die Torsionsfestigkeit erhöht. Zusätzlich kann dabei vorgesehen sein, dass die beiden Wandelemente über wenigstens einen Verbindungsabschnitt miteinander verbunden sind und wobei vorzugsweise zwei Verbindungsabschnitte vorgesehen sind, die zueinander im Winkel angeordnet sind.

Der oder die Verbindungsabschnitte schließen das Hohlprofil zu einer geschlossenen Struktur. Wenn die zwei Verbindungsabschnitte im Winkel zueinander stehen, so ergibt sich eine sickenartige Einmuldung, die zur Innenseite oder zur Außenseite des Hohlprofils hin eingemuldet sein kann und die dann zur weiteren Versteifung des Hohlprofils beiträgt.

Wie dies vorstehend erwähnt wurde, kann das Hohlprofil von dem Träger selbst gebildet sein. Beispielsweise kann hierzu das Material des Trägers in mehreren Abkantschritten zu einem Hohlprofil umgeformt werden und dann die offene Profilseite verschweißt werden.

Denkbar ist es jedoch auch, dass das Verstärkungsprofil ein Bauteil bildet, das auf eine Seitenfläche des Wandelements des Trägers aufgesetzt und mit diesem verschweißt ist, wobei die Schweißnähte in Richtung der Längserstreckung des Hohlprofils verlaufen. Dann kann insbesondere der Träger mit einer zu dem Verstärkungsprofil abweichenden Profildicke gefertigt werden. Damit ist eine belastungsoptimierte Auslegung möglich. Zudem kann das Verstärkungsprofil als separates Bauteil einfach gefertigt und dann mit dem Träger verbunden werden.

Eine denkbare Erfindungsvariante kann dergestalt sein, dass an der Unterseite des Bodens Rippen angeordnet sind, die sich quer zu der Förderrichtung erstrecken, und dass die Rippen mit der Außenseite des Hohlprofils verbunden, vorzugsweise verschweißt sind und/oder dass an der Unterseite des Bodens Versteifungsrippen angeordnet sind, die sich quer zu der Förderrichtung erstrecken.

Es kann dabei auch vorgesehen sein, dass zwei Versteifungsrippen und/oder wenigstens zwei Rippen mittels wenigstens eines, sich in Förderrichtung erstreckenden Verbindungsabschnitts miteinander verbunden sein.

Die Versteifungsrippen bzw. Rippen steifen den Boden aus und ermöglichen damit für den Rinnenträger eine stabile und leichte Bauweise. Wenn die Rippe mit dem Hohlprofil verbunden ist, wird eine weitere Festigkeitsoptimierung erreicht.

Mit dem Verbindungsabschnitt ergibt sich ein steifes Kastenprofil. Dies ist insbesondere dann von Vorteil, wenn vorgesehen ist, dass zwei benachbarte Versteifungsrippen mittels eines Flansches miteinander verbunden sind, und dass mit dem Flansch ein Schwingungselement, vorzugsweise eine Feder, verbunden ist.

Besonders bevorzugt kann es vorgesehen sein, dass zwei Hohlprofilabschnitte vorgesehen sind, die quer zur Förderrichtung zueinander beabstandet angeordnet sind. Dabei empfiehlt es sich insbesondere zwei baugleiche Hohlprofilabschnitte zu verwenden, die insbesondere symmetrisch zueinander angeordnet sind.

Es hat sich gezeigt, dass eine Anordnung mit zwei Hohlprofilabschnitten eine vergleichsweise höhere Bauteilsteifigkeit bringt, als ein einziger Hohlprofilabschnitt, welcher die gleiche Baugröße aufweist wie die beiden Hohlprofilabschnitte zusammen.

Hierbei kann es auch weiterhin vorgesehen sein, dass die sich quer zur Förderrichtung erstreckende Bauteilbreite, welche sich aus der Breite der beiden Hohlprofile zuzüglich der Breite des Abstands zwischen den Hohlprofilen ergibt, mindestens 70 % der Breite des Halters für den/die Schwingungserreger in dieser Richtung beträgt. Es hat sich überraschenderweise gezeigt, dass durch diese einfache Maßnahme nur eine geringe elastische Verformung des Halters, auch im extrem belasteten Dauerbetrieb, zu erwarten ist.

Um eine Schwächung des Hohlprofils zu vermeiden, empfiehlt es sich, dass das Hohlprofil bzw. die Hohlprofile im Bereich ihrer Längserstreckung nicht durchbrochen sind, insbesondere keine Öffnungen und/oder Durchdringungen anderer Bauteile, insbesondere der Versteifungsrippen, aufweisen.

Die Erfindung wird im Folgenden anhand eines in den Zeichnungen dargestellten Ausführungsbeispiels näher erläutert. Es zeigen:
- Figur 1:: in schematischer Prinzipdarstellung eine mobile Brechanlage in Seitenansicht,
- Figur 2:: in perspektivischer Frontansicht eine Aufgaberinne einer Aufgabeeinheit der mobilen Brechanlage gemäß Figur 1,
- Figur 3:: die Aufgaberinne gemäß Figur 2 in perspektivischer Ansicht von hinten und unten,
- Figur 4:: die Aufgaberinne gemäß den Figuren 2 und 3 in Seitenansicht,
- Figur 5:: die Aufgaberinne gemäß den Figuren 2 bis 4 in Ansicht von oben,
- Figur 6:: die Aufgaberinne gemäß den Figuren 2 bis 5 in Schnittansicht gemäß dem in Figur 4 mit VI-VI markierten Schnittverlauf,
- Figur 7:: ein der Figur 6 entnommenes und dort mit VII markiertes Detail und
- Figur 8:: die Aufgaberinne gemäß den Figuren 2 bis 7 in Ansicht von hinten.
- Figuren 9: einen Schwingungserreger in perspektivischer Ansicht von hinten,
- Figur 10: den Schwingungserreger gemäß Fig 9 in perspektivischer Ansicht von vorne und
- Figur 11:: eine symbolische Darstellung einer Erregungseinrichtung,

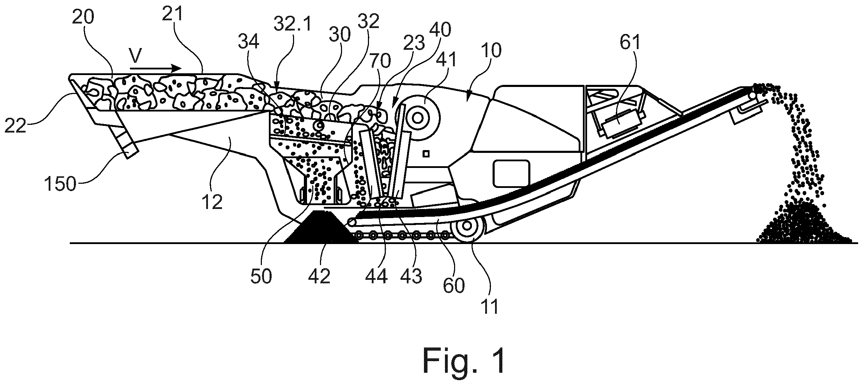

Figur 1 zeigt eine Aufbereitungsanalage, nämlich eine mobile Brechanlage 10, wie sie typischerweise zur Zerkleinerung von Recycling-, Gesteinsmaterial oder sonstigem mineralischen Material eingesetzt wird. Diese mobile Brechanlage 10 weist ein Maschinenchassis auf, das von zwei als Kettenlaufwerken ausgebildeten Fahrwerken 11 getragen ist.

Die Brechanlage 10 ist mit einer Aufgabeeinheit 20 ausgerüstet, die üblicherweise als trichterförmige Aufgabeeinheit 20 mit zwei Trichterseitenwänden 21 und einer Trichterrückwand 22 ausgeführt ist. Die Aufgabeeinheit 20 wird von einem Ausleger 12 des Maschinenchassis getragen.

Über diese Aufgabeeinheit 20 kann die Brechanlage 10 mit dem zu zerkleinernden Gut befüllt werden. Die Aufgabeeinheit 20 weist bodenseitig eine Transporteinrichtung auf, die insbesondere eine Aufgaberinne aufweist. Über diese Fördereinrichtung wird das zu zerkleinernde Gut einer Siebeinheit 30 zugefördert. Der Aufgabeeinheit ist ein Schwingungserreger 150 zugeordnet, der als ExzenterAntrieb ausgeführt sein kann. Mit diesem Schwingungserreger 150 lässt sich die Aufgabeeinheit in Schwingung versetzen, um das in Förderrichtung V geförderte Gut der Siebeinheit 30 zuzuleiten. In der Siebeinheit 30 wird das zugeführte Material einem Siebprozess unterzogen. Das Anlagendesign kann so gewählt sein, dass der Schwingungserreger 150 nicht nur die Aufgaberinne, sondern auch die Siebeinheit 30 zu Transportzwecken in Schwingung versetzt. Insbesondere wird in Verbindung mit der geneigten Anordnung der Aufgaberinne und/oder eines oder mehrerer Siebdecks auch eine Transportwirkung, wie bei einem Vibrationsförderer, erreicht.

Wie Figur 1 erkennen lässt, wird die grobe Gesteinsfraktion, welche nicht ausgesiebt wird, von der Siebeinheit 30 einem Brechaggregat 40 zugefördert (Übergabebereich 23). Das Brechaggregat 40 ist vorliegend in Form eines Backenbrechers ausgeführt. Dieses Brechaggregat 40 weist zwei Brechbacken 42, 43 auf, die einen konvergierenden Spalt bilden. In diesen Spaltbereich hinein wird das zu zerkleinernde Gut gefördert. Das Brechaggregat 40 besitzt eine feststehende Brechbacke 42 und eine bewegliche Brechbacke 43. Die bewegliche Brechbacke 43 wird von einem Exzenterantrieb 41 angetrieben.

Wie Figur 1 erkennen lässt, wird das grobe Gesteinsmaterial im konvergierenden Spalt gebrochen. Bodenseitig verlässt das gebrochene und zerkleinerte Gesteinsmaterial das Brechaggregat 40 im Bereich eines Brechmauls 44 des konvergierenden Spalts und fällt schwerkraftbedingt auf ein Brecherabzugsband 60. Das Brecherabzugsband 60 kann, wie vorliegend als endlos umlaufendes Transportband ausgebildet sein.

Über das Brecherabzugsband 60 wird das zerkleinerte Gesteinsmaterial abgeleitet und hinter der Brechanlage 10 aufgehäuft.

Im Bereich des Brecherabzugsbands 60 kann an der Brechanlage 10 ein Magnetabscheider 61 vorgesehen sein. Dieser ist oberhalb des Materialstroms, welcher auf dem Brecherabzugsband 60 geführt ist, angeordnet. Magnetische, bzw. magnetisierbare Metallteile im Materialstrom werden von dem Magnetabscheider 61 magnetisch angezogen und aus dem Materialstrom ausgeschieden.

Wie die Zeichnung erkennen lässt, wird das von der Aufgabeeinheit 20 kommende Gut in der Siebeinheit 30 über ein Vorsieb 32 (z.B. Obersiebdeck) geleitet. Dabei wird ein Teil des Gesteinsmaterials ausgesiebt. Es handelt sich dabei um Gesteinsteile, welche aufgrund ihrer Größe nicht durch das Brechaggregat 40 geschickt werden müssen, da sie bereits eine Größe aufweisen, die in etwa der Gesteinsgröße entspricht, welche von dem Brechaggregat 40 gebrochen wird. Wie die Zeichnung erkennen lässt, wird ein Teil dieser ausgesiebten Gesteinsfraktion unmittelbar auf den Brecherabzugsband 60 aufgegeben und zwar im Bypass vorbei an dem Brechaggregat 40.

Wie Figur 1 erkennen lässt, kann unterhalb des Vorsiebs 32 nun ein weiteres Siebunterdeck 34 in der Siebeinheit 30 vorhanden sein. Dieses Siebunterdeck 34 siebt aus dem bereits ausgesiebten Material eine weitere, feine Teilfraktion aus. Es ist nun teilweise gewünscht, diese besonders feine Teilfraktion zu separieren, wozu ein Seitenaustragband 50 Verwendung findet. Auf dieses endlos umlaufende Seitenaustragband 50 wird die feine Teilfraktion aufgegeben, aus dem Arbeitsbereich der Brechanlage 10 heraus gefördert und angehäuft, wie dies Figur 1 erkennen lässt.

Nun ist es so, dass nicht immer ein Ausfördern der feinen Teilfraktion gewünscht ist. Vielmehr möchte der Maschinenführer die Wahl haben, ob er sie separiert oder gemeinsam mit dem gröberen ausgesiebten Material direkt auf den Brecherabzugsband 60 aufgeben möchte. Zu diesem Zweck ist eine verstellbare Klappenrutsche 70 verwendet.

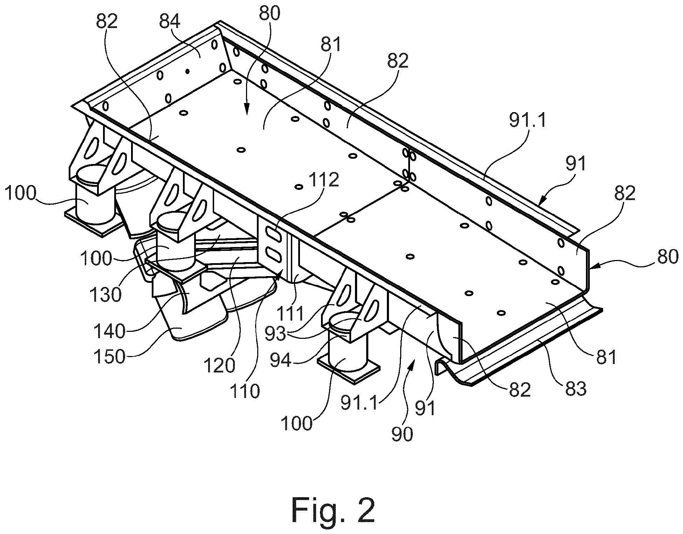

In Figur 2 bis 5 ist ein Teil der Aufgabeeinheit 20, nämlich die Aufgaberinne in isolierter Teildarstellung gezeigt. Wie diese Darstellungen kenntlich machen, weist die Aufgaberinne einen Rinnenträger 90 auf. Der Rinnenträger 90 besitzt einen Boden 92 und daran seitlich angeschlossene und vom Boden 92 aufsteigende Seitenwände 91. Der Boden 92 und/oder die Seitenwände 91 können mit Verschleißschutzeinsätzen 80 ganz oder teilweise belegt sein. Der Verschleißschutzeinsatz 80 kann von Verschleißplatten gebildet sein, die einen Boden 81 bzw. Seitenwände 82 und eine Rückwand 84 bilden. Mit diesen Verschleißplatten überdeckt der Verschleißschutzeinsatz 80 ganz oder teilweise den Boden 92 und die Seitenwände 91 des Rinnenträgers 90.

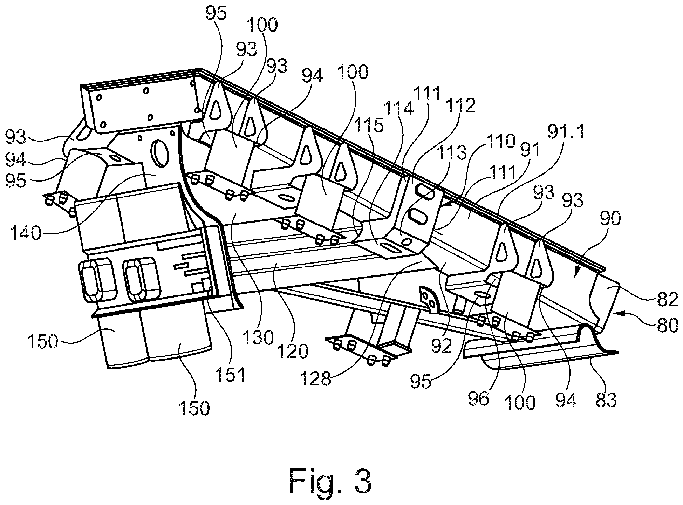

Im Bereich der Unterseite der Aufgaberinne sind Versteifungsrippen 93 vorgesehen. Die Versteifungsrippen 93 sind so ausgebildet, dass sie den Boden 92 untergreifen und zumindest teilweise auch über die Seitenwände 91 geführt sind. Vorzugsweise sind die Versteifungsrippen 93 sowohl mit dem Boden 92 als auch mit den Seitenwänden 91 verschweißt. Figur 3 macht deutlich, dass jeweils zwei benachbarte Versteifungsrippen 93 über einen Verbindungsabschnitt 95 U-förmig miteinander verbunden sind.

Im Bereich der längsseitigen Enden der Versteifungsrippen 93 kann weiterhin auch ein Verbindungsabschnitt 96 vorgesehen sein, der im Winkel zu dem Verbindungsabschnitt 95 steht und mit diesem verbunden, vorzugsweise verschweißt ist.

Die beiden benachbarten Versteifungsrippen 93 sind im Bereich der Seitenwände 91 jeweils mit einem Flansch 94 verbunden. Dieser Flansch 94 dient zur Ankopplung eines Schwingungselements 100, welches beispielsweise von einer Feder gebildet sein kann.

Wie Figur 3 weiter erkennen lässt, kann unterhalb der Aufgaberinne auch zumindest ein weiteres Aussteifungselement 110 vorgesehen sein. Das Aussteifungselement 110 weist zwei Rippen 111 auf. Diese können ähnlich gestaltet sein, wie die Versteifungsrippen 93, mit dem Unterschied, dass sie keinen Flansch 94 aufweisen. Entsprechend sind die Rippen 111 mit Verbindungsabschnitten 112 und 113 bzw. 114 miteinander verbunden, sodass sich eine geschlossene Kastenstruktur bildet, welche unterseitig am Boden 92 befestigt ist und seitlich an den Außenseiten der Seitenwände 91 anliegt.

Figur 3 lässt erkennen, dass an die Unterseite des Bodens 92 ein Träger 130 angekoppelt ist. Der Träger 130 kann von einem Blechabschnitt gebildet sein. Dieser Blechabschnitt weist in einem ersten Anschlussbereich 131 Aussparungen auf. Diese Aussparungen sind seitlich bis an die Versteifungsrippen 93 geführt und übergreifen die Verbindungsabschnitte 95. Dementsprechend erstrecken sich die Versteifungsrippen 93 über die gesamte Breite des Bodens 92. Der Träger 130 ist in seinem ersten Anschlussbereich 131 vorzugsweise mit der Unterseite des Bodens 92, den Versteifungsrippen 93 und den Verbindungsabschnitten 95 verschweißt.

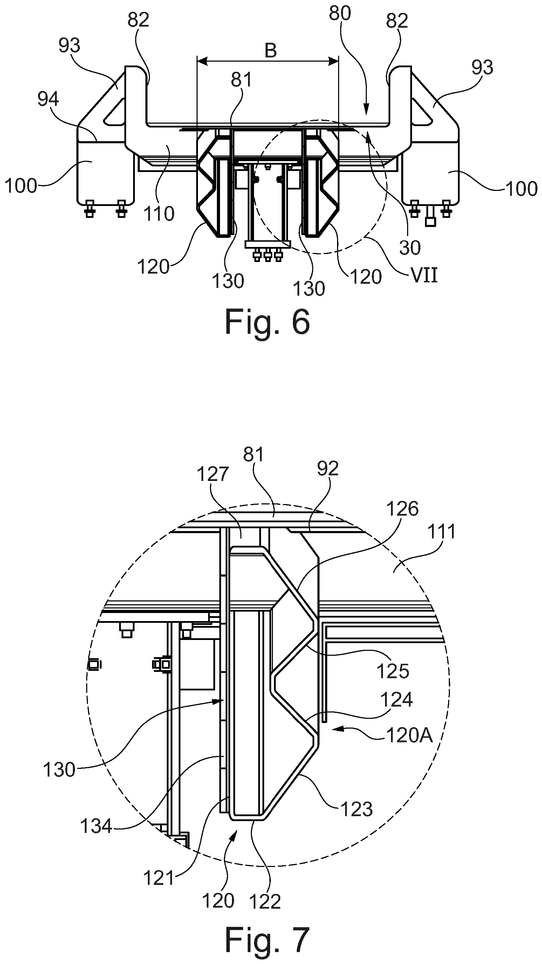

Wie Figur 6 erkennen lässt, sind auf diese Weise zwei Träger 130 unterseitig am Boden 92 festgemacht, wobei die Träger 130 unter Bildung eines Abstandsraums zueinander beabstandet angeordnet sind. Auf die einander abgewandten Außenseiten der Träger 130 sind Verstärkungsprofile 120 aufgesetzt. Diese Verstärkungsprofile 120 verlaufen dabei im spitzen Winkel zu der Förderrichtung V der Aufgaberinne.

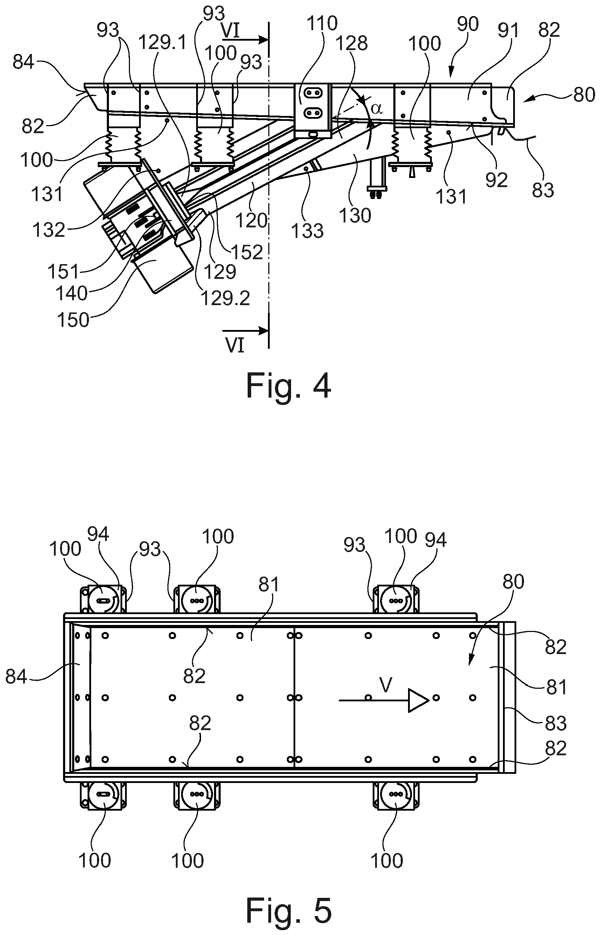

Die Förderrichtung V ist beispielsweise in Figur 5 markiert und verläuft längs des Bodens 92 von der Rückwand 84 der Aufgaberinne hin zu einem am Ende der Aufgaberinne angeordneten Überbrückungsstück 83, welches die Aufgaberinne in die Siebeinheit 30 überleitet.

Die Gestaltung des Verstärkungsprofils 120 lässt sich näher Figur 7 entnehmen. Wie diese Darstellung veranschaulicht, kann der Träger 130 in Form eines Blechs ausgebildet sein oder der Träger 130 weist zumindest einen blechartigen Wandabschnitt auf.

Das Verstärkungsprofil 120 weist zwei Distanzstücke 122, 127 auf, die im weiten Abstand zueinander stehen. Von dem Distanzstück 122 ist zudem ein Anlegeabschnitt 121 abgebogen, der auf die Außenseite des zugeordneten Trägers 130 aufgelegt werden kann. An die beiden Distanzstücke 122, 127 schließen sich im Winkel größer als 90° Wandelemente 123, 126 an. Die beiden Wandelemente 123 und 126 stehen ebenfalls zueinander im Winkel. An den, den Distanzstücken 122, 127 abgewandten Enden sind die Wandelemente 123, 126 in Verbindungsabschnitte 124, 125 übergeleitet. Die beiden Verbindungsabschnitte 124, 125 stehen sowohl zueinander im Winkel als auch zu den jeweils anschließenden Wandelementen 123, 126.

Wie Figur 7 zeigt, bilden die beiden Verbindungsabschnitte 124, 125 eine muldenförmige Eintiefung, die in Richtung auf den Innenraum des Verstärkungsprofils eingetieft ist. Hierdurch ergibt sich eine W-förmige Bauweise, die besonders platzsparend ist. Selbstverständlich kann die Eintiefung auch in die entgegengesetzte Richtung zur Außenseite des Verstärkungsprofils 120 hin gerichtet sein. Denkbar ist es auch, dass mehrere dieser muldenartigen Vertiefungen am Verstärkungsprofil 120 und/oder am Träger 130 vorgesehen sind.

Denkbar ist es auch, dass die Distanzstücke 122, 127 unmittelbar über einen Verbindungsabschnitt kastenförmig ineinander übergeleitet sind, sodass sich ein rechteckförmiger Querschnitt bildet.

Das Verstärkungsprofil ist mit dem freien Ende des Distanzstücks 127 und dem Anlegeabschnitt 121 auf die Außenseite des Trägers 130 aufgelegt. Anschließend wird das Verstärkungsprofil 120 im Bereich der Außenseite des Distanzstückes 127 und im Übergangsbereich zwischen dem Distanzstück 122 und dem Anlegeabschnitt 121 mit dem Träger 130 verschweißt, wobei sich die Schweißnähte vorzugsweise über die gesamte axiale Länge des Verstärkungsprofils 120 erstrecken. Auf diese Weise ergibt sich mit dem Verstärkungsprofil 120 und dem zugeordneten Bereich des Trägers 130 ein geschlossenes Hohlprofil, wie Figur 7 deutlich zeigt.

In Figur 4 ist eine Variante gezeigt, bei der ein Aussteifungselement 129.1 verwendet ist. Dieses Aussteifungselement 129.1 weist zwei Seitenbereiche auf, die an den Verbindungsabschnitten 124 und 125 des Verstärkungsprofils 120 angelegt und hier mit diesem verschweißt sind. Auf diese Weise wird das Verstärkungsprofil 120 in seinem, dem Halter 140 zugewandten Endabschnitt 129 ausgesteift. Der Halter 140 ist hier mit der Stirnseite des Verstärkungsprofils 120 verbunden, vorzugsweise verschweißt. Zudem kann der Träger 130 hier einen zweiten Anschlussbereich 132 bilden, mit dem der Halter 140 verbunden, vorzugsweise verschweißt sein kann. Schließlich kann es auch vorgesehen sein, dass das Aussteifungselement 129.1 welches seitlich über den Außenumfang des Verstärkungsprofils 120 vorsteht, an der zugeordneten Rückseite des Halters 140 anliegt und hier angekoppelt ist.

Weiterhin kann auch ein zusätzliches zweites Aussteifungselement 129.2 vorgesehen sein. Dieses zweite Aussteifungselement 129.2 ist ebenfalls mit der Außenseite des Verstärkungsprofils 120, beispielsweise im Bereich des Distanzstückes 122 und des Wandelements 123 mit dem Verstärkungsprofil 120 verbunden und steht über den Außenumfang des Verstärkungsprofils 120 vor. Weiterhin stützt sich dieses zweite Aussteifungselement 129.2 auch auf der Rückseite des Halters 140 ab. Der Halter 140 kann dann auch mit diesem zweiten Aussteifungselement 129.2 verbunden sein.

Wie Figur 4 veranschaulicht, ist der dem Halter 140 gegenüberliegende Endabschnitt 128 des Verstärkungsprofils 120 bis an den Boden 92 geführt. Auch hier ist das Verstärkungsprofil 120 mit dem Boden 92 verschweißt.

Das Aussteifungselement 110 ist so ausgeführt, dass es die Hohlprofile durchdringt, somit durch die Außenkontur des Verstärkungsprofils 120 hindurchgeführt und dann daran festgeschweißt ist.

Der Halter 140 ist, wie dies Figur 3 zeigt, im Wesentlichen plattenförmig ausgebildet. Er ist bis an den Boden 92 geführt und hier befestigt. Darüber hinaus ist der Halter 140 auch an den Träger 130 in dessen zweiten Anschlussbereich 132 angekoppelt.

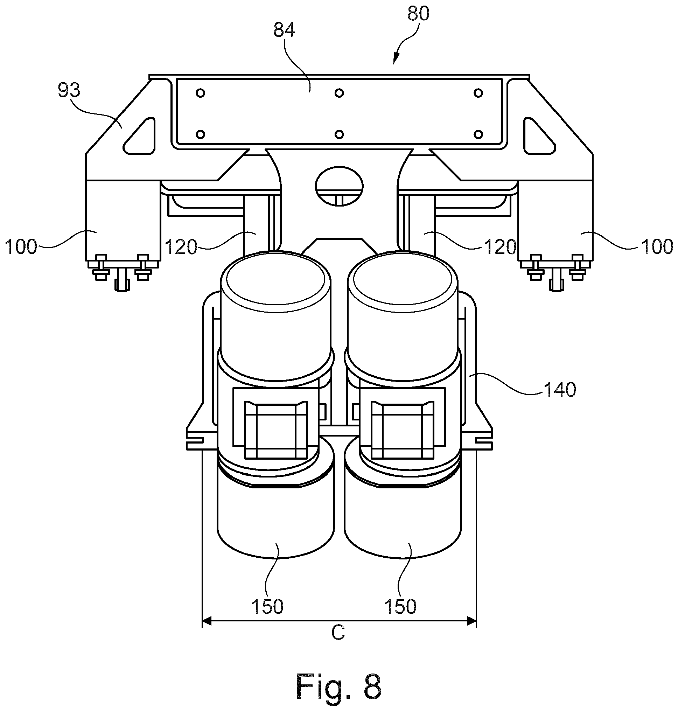

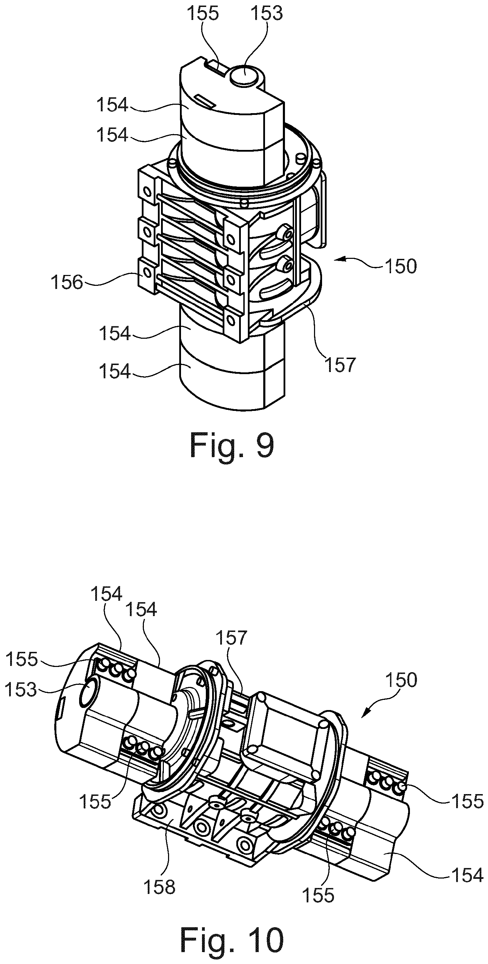

In den Figuren 8 bis 10 ist die Erregungseinrichtung der Erfindung näher gezeigt. Wie Figur 8 veranschaulicht, sind auf der dem Träger 130 abgewandten Seite des Halters 140 zwei Schwingungserreger 150 befestigt. Der Aufbau der beiden Schwingungserreger ist in den Figuren 9 und 10 näher detailliert. Wie diese Zeichnungen erkennen lassen, weisen die Schwingungserreger 150 ein Gehäuse auf. In diesem Gehäuse 157 sind zwei Antriebsmotoren untergebracht. Jeder dieser Antriebsmotoren treibt eine Welle 153 an. Die Wellen 153 sind aus dem Gehäuse 157 herausgeführt und tragen an ihren Enden Unwuchtmassen 154. Die Unwuchtmassen 154 sind über Klemmvorrichtung 155 auf den Wellen 153 befestigt. Die Klemmvorrichtungen 155 ermöglichen es die Positionierung der Unwuchtmassen 154 auf der Welle 153 zu verändern. Zu diesem Zweck kann die Klemmvorrichtung 155 gelöst werden. Dann lässt sich die jeweilige Unwuchtmasse 154 um die Drehachse der Welle 153 herum um das gewünschte Maß verdrehen. Anschließend kann die Klemmvorrichtung 155 wieder angezogen werden. Auf diese Weise können die beiden Unwuchtmassen 154 jeder Welle 153 so zueinander positioniert werden, dass die gewünschte Unwucht entsteht. In der in den Figuren 9 und 10 gezeigten Anordnung ist die Unwucht maximal, da beide Unwuchtmassen 154 mit gleicher Orientierung auf der Welle 153 angeordnet sind.

Das Gehäuse 157 weist einen Flansch 158 auf. Mit diesem Flansch 158 kann der Schwingungserreger 150 auf dem Halter 140 aufgesetzt und mit den vorbeschriebenen Befestigungselementen 151 an diesem befestigt werden.

Die Motoren können beispielsweise als elektrische, hydraulische oder pneumatische Antriebsmotoren ausgeführt sein.

Figur 8 lässt die Anordnung der beiden Schwingungserreger 150 an dem Halter 140 deutlich erkennen.

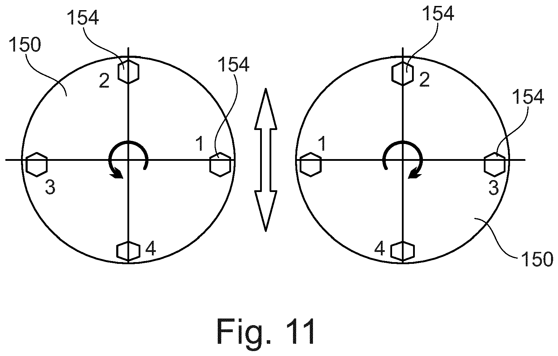

In Figur 11 sind die beiden an dem Halter 140 befestigten Schwingungserreger 150 symbolisch dargestellt. Anhand dieser Darstellung soll die Funktion nachstehend kurz erläutert werden. Die Zeichnung lässt die beiden am Halter 140 angeordneten Schwingungserreger 150 erkennen. Mit Rauten sind verschiedene Positionen der Unwuchtmassen 154 symbolisch dargestellt. Im Einzelnen sind für jeden Schwingungserreger 150 vier Positionen veranschaulicht. In Position 1 sind alle Unwuchtmassen 154, entsprechend der Anordnung gemäß den Figuren 9 und 10 der beiden Schwingungserreger 150 einander zugewandt. Entsprechend stehen die Unwuchtmassen 154 in der Position 3 einander diametral gegenüber. Die Unwuchtmassen kompensieren sich dementsprechend. Die Positionen 2 und 3 stellen Extremstellungen zwischen diesen beiden Positionen 1 und 3 dar, in denen sich die Unwuchten addieren. Wenn die Schwingungserreger 150 entsprechend den in der Zeichnung dargestellten Drehrichtungen betrieben werden, so ergibt sich ein resultierender Kraftvektor, der in Figur 11 mit einem Doppelpfeil dargestellt ist. Dieser resultierende Kraftvektor entspricht der Erregungsrichtung E. Diese Erregungsrichtung E verläuft in Richtung der Längserstreckung des Trägers 130 (Hohlprofil).

Wie Figur 6 veranschaulicht, und wie dies bereits vorstehend erwähnt wurde, sind an der Unterseite des Bodens 92 zwei Träger 130 vorgesehen, die jeweils ein Verstärkungsprofil 120 halten. Die beiden Verstärkungsprofile 120 sind dabei baugleich ausgebildet und spiegelsymmetrisch zu der Mittellängsachse, welche in Figur 6 senkrecht zur Bildebene und in Richtung der Bildtiefe in Förderrichtung V verläuft, angeordnet. Auf diese Weise ergibt sich eine gleichmäßige Kraftübertragung vom Halter 140, der die Kräfte der Schwingungserreger 150 aufnimmt, in den Boden 92 und damit in die Aufgaberinne.

Zwischen den Außenseiten der beiden Verstärkungsprofile 120 ergibt sich gemäß Figur 6 eine Bauteilbreite B. Diese Bauteilbreite B beträgt mindestens 70 % der Breite des Halters 140 in Richtung der Breite B.

Wie die vorstehenden Schilderungen erläutern, betrifft die Erfindung mithin eine Aufgabeeinheit für eine Aufbereitungsanlage. Im vorstehenden Ausführungsbeispiel wurde die Erfindung in Bezug auf eine Brechanlage vom Typ Backenbrecher beschrieben. Selbstverständlich kann die Aufgabeeinheit auch bei einer Siebanlage oder einer Brechanlagen anderen Typs, z.B. Prallbrecher, Kegelbrecher, etc. Verwendung finden.

Die Aufgabeeinheit besitzt eine Aufgaberinne, die einen Rinnenträger 90 aufweist, wobei der Rinnenträger 90 einen Boden 92 aufweist, wobei sich der Boden 92 in Förderrichtung V der Aufgaberinne erstreckt. Im Bereich der Unterseite des Bodens 92 ist wenigstens ein sich in Förderrichtung V erstreckender Träger 130 angeordnet, der den Boden 92 abstützt. Es ist weiterhin ein Halter 140 vorgesehen, der zumindest einen Schwingungserreger 150 trägt. Der Träger 130 ist an den Halter 140 angeschlossen und bildet ein geschlossenes Hohlprofil. Alternativ kann auch wenigstens ein Wandabschnitt des Trägers 130 zusammen mit einem daran angeschlossenen Verstärkungsprofil 120 ein geschlossenes Hohlprofil bilden. Das Hohlprofil erstreckt sich dabei in Richtung der Förderrichtung V.

## Patentansprüche

1. Aufgabeeinheit für eine Aufbereitungsanlage, insbesondere für eine Brech- oder Siebanlage, mit einer Aufgaberinne, die einen Rinnenträger (90) aufweist, wobei der Rinnenträger (90) einen Boden (92) aufweist, wobei sich der Boden (92) in Förderrichtung (V) der Aufgaberinne erstreckt, wobei im Bereich der Unterseite des Bodens (92) wenigstens ein sich in Förderrichtung (V) erstreckender Träger (130) angeordnet ist, der den Boden (92) abstützt, wobei weiterhin ein Halter (140) vorgesehen ist, der zumindest einen Schwingungserreger (150) einer Erregungseinrichtung trägt, wobei die Erregungseinrichtung mittels des mindestens einen Schwingungserregers eine Schwingung in einer Erregungsrichtung erzeugt, und wobei der Träger (130) an den Halter (140) angeschlossen ist,
**dadurch gekennzeichnet,**
**dass** der Träger (130) ein geschlossenes Hohlprofil bildet oder wenigstens ein Wandabschnitt des Trägers (130) zusammen mit einem daran angeschlossenen Verstärkungsprofil (120) ein geschlossenes Hohlprofil bildet,
und **dass** sich das Hohlprofil mit einer Winkelabweichung im Bereich von +/-15° in Richtung der Erregungsrichtung erstreckt.

2. Aufgabeeinheit nach Anspruch 1, **dadurch gekennzeichnet, dass** das Hohlprofil an seinen längsseitigen Enden jeweils einen Endabschnitt (128, 129) aufweist, und dass das Hohlprofil mit seinem ersten Endabschnitt (128) mit dem Boden (92) und mit seinem zweiten Endabschnitt (129) mit dem Halter (140) verbunden ist.

3. Aufgabeeinheit nach Anspruch 1 oder 2, **dadurch gekennzeichnet, dass** das Hohlprofil in einem Winkel (a) kleiner 90° zu der Förderrichtung bzw. zu dem Boden (92) verläuft, wobei der Winkel insbesondere als spitzer Winkel im Bereich zwischen 20° und 50°, bevorzugt im Bereich zwischen 25° und 35°, insbesondere 30° ausgebildet ist.

4. Aufgabeeinheit nach einem der Ansprüche 1 bis 3, **dadurch gekennzeichnet, dass** im Bereich des dem Halter (140) zugekehrten Endabschnitts (129) des Hohlprofils wenigstens ein Aussteifungselement (129.1, 129.2) angeordnet ist, wobei das Aussteifungselement (129.1, 129.2) sowohl mit der Außenseite des Hohlprofils als auch mit dem Halter (140) verbunden ist, und dass das Aussteifungselement (129.1, 129.2) zumindest bereichsweise seitlich über den Außenumfang des Hohlprofils vorsteht.

5. Aufgabeeinheit nach einem der Ansprüche 1 bis 4, **dadurch gekennzeichnet, dass** der Träger (130) ein Wandelement (134) aufweist, an das zwei Distanzstücke (122, 127) des Hohlprofils anschließen, und dass die Distanzstücke (122, 127) einen Profilabschnitt (120A) des Hohlprofils beabstandet zu dem Wandelement (134) halten.

6. Aufgabeeinheit nach Anspruch 5, **dadurch gekennzeichnet, dass** das Wandelement (134) und/oder der Profilabschnitt (120 A) eine Einmuldung aufweist, die vorzugsweise in Richtung auf den von dem Hohlprofil umschlossenen Innenraum hin eingetieft ist.

7. Aufgabeeinheit nach einem der Ansprüche 5 oder 6, **dadurch gekennzeichnet, dass** an die beiden Distanzstücke (122, 127) jeweils ein Wandelement (123, 126) angeschlossen ist, wobei die beiden Wandelemente (123, 126) zueinander im Winkel stehen.

8. Aufgabeeinheit nach Anspruch 7, **dadurch gekennzeichnet, dass** die beiden Wandelemente (123, 126) über wenigstens einen Verbindungsabschnitt (124, 125) miteinander verbunden sind und wobei vorzugsweise zwei Verbindungsabschnitte (124, 125) vorgesehen sind, die zueinander im Winkel angeordnet sind.

9. Aufgabeeinheit nach einem der Ansprüche 1 bis 8, **dadurch gekennzeichnet, dass** das Verstärkungsprofil (120) ein Bauteil bildet, das auf eine Seitenfläche des Wandelements (134) des Trägers (130) aufgesetzt und mit diesem verschweißt ist, wobei die Schweißnähte in Richtung der Längserstreckung des Hohlprofils verlaufen.

10. Aufgabeeinheit nach einem der Ansprüche 1 bis 9, **dadurch gekennzeichnet, dass** an der Unterseite des Bodens (92) Rippen (111) angeordnet sind, die sich quer zu der Förderrichtung (V) erstrecken, und dass die Rippen (111) mit der Außenseite des Hohlprofils verbunden, vorzugsweise verschweißt sind und/oder dass an der Unterseite des Bodens (92) Versteifungsrippen (93) angeordnet sind, die sich quer zu der Förderrichtung (V) erstrecken.

11. Aufgabeeinheit nach Anspruch 10, **dadurch gekennzeichnet, dass** wenigstens zwei Versteifungsrippen (93) und/oder oder wenigstens zwei Rippen (111) mittels wenigstens eines, sich in Förderrichtung (V) erstreckenden Verbindungsabschnitts (95, 96, 112, 113, 114) miteinander verbunden sind.

12. Aufgabeeinheit nach Anspruch 10 oder 11, **dadurch gekennzeichnet, dass** zwei benachbarte Versteifungsrippen (93) mittels eines Flansches (94) miteinander verbunden sind, und dass mit dem Flansch (94) ein Schwingungselement (100), vorzugsweise eine Feder, verbunden ist.

13. Aufgabeeinheit nach einem der Ansprüche 1 bis 12, **dadurch gekennzeichnet, dass** zwei Hohlprofilabschnitte vorgesehen sind, die quer zur Förderrichtung (V) zueinander beabstandet angeordnet sind.

14. Aufgabeeinheit nach Anspruch 12, **dadurch gekennzeichnet, dass** die sich quer zur Förderrichtung (V) erstreckende Bauteilbreite (B), welche sich aus der Breite der beiden Hohlprofile zuzüglich der Breite des Abstands zwischen den Hohlprofilen ergibt, mindestens 70 % der Breite (C) des Halters (140) in dieser Richtung beträgt.

15. Mobile Brech- oder Siebanlage mit einer Aufgabeeinheit nach einem der Ansprüche 1 bis 14.

## Claims

1. Feed unit for a processing plant, in particular for a crushing or screening plant, having a feed chute which has a chute support (90), the chute support (90) having a base (92), the base (92) extending in the conveying direction (V) of the feed chute, at least one support (130) extending in the conveying direction (V) being arranged in the region of the underside of the base (92), which supports the bottom (92), wherein furthermore a holder (140) is provided which carries at least one vibration exciter (150) of an excitation device, wherein the excitation device generates a vibration in an excitation direction by means of the at least one vibration exciter, and wherein the support (130) is connected to the holder (140),
**characterized in**
**that** the support (130) forms a closed hollow profile or at least a wall portion of the support (130) together with a reinforcing profile (120) connected thereto forms a closed hollow profile
and **that** the hollow profile extends with an angular deviation in the range of +/-15° in the direction of the excitation direction.

2. Feed unit according to claim 1, **characterized in that** the hollow profile has an end portion (128, 129) at each of its longitudinal ends, and **in that** the hollow profile is connected by its first end portion (128) to the base (92) and by its second end portion (129) to the holder (140).

3. Feed unit according to claim 1 or 2, **characterized in that** the hollow profile runs at an angle (a) smaller than 90° to the conveying direction or to the bottom (92), the angle being formed in particular as an acute angle in the range between 20° and 50°, preferably in the range between 25° and 35°, in particular 30°.

4. Feed unit according to one of the claims 1 to 3, **characterized in that** at least one stiffening element (129.1, 129.2) is arranged in the region of the end portion (129) of the hollow profile facing the holder (140), the stiffening element (129.1, 129.2) being connected both to the outside of the hollow profile and to the holder (140), and **in that** the stiffening element (129.1, 129.2) projects laterally at least in regions beyond the outer circumference of the hollow profile.

5. Feed unit according to any one of claims 1 to 4, **characterized in that** the support (130) has a wall element (134) to which two spacers (122, 127) of the hollow profile are connected, and **in that** the spacers (122, 127) hold a profile section (120A) of the hollow profile at a distance from the wall element (134).

6. Feed unit according to claim 5, **characterized in that** the wall element (134) and/or the profile section (120A) has a recess which is preferably deepened towards the inner space enclosed by the hollow profile.

7. Feed unit according to one of claims 5 or 6, **characterized in that** a wall element (123, 126) is connected to each of the two spacers (122, 127), the two wall elements (123, 126) being at an angle to one another.

8. Feed unit according to claim 7, **characterized in that** the two wall elements (123, 126) are connected to one another via at least one connecting section (124, 125) and wherein preferably two connecting sections (124, 125) are provided which are arranged at an angle to one another.

9. Feed unit according to one of the claims 1 to 8, **characterized in that** the reinforcing profile (120) forms a component which is placed on a side surface of the wall element (134) of the support (130) and is welded thereto, the weld seams running in the direction of the longitudinal extension of the hollow profile.

10. Feed unit according to any one of claims 1 to 9, **characterized in that** ribs (111) are arranged on the underside of the base (92) and extend transversely to the conveying direction (V), and **in that** the ribs (111) are connected, preferably welded, to the outside of the hollow profile and/or **in that** stiffening ribs (93) are arranged on the underside of the base (92) and extend transversely to the conveying direction (V).

11. Feed unit according to claim 10, **characterized in that** at least two stiffening ribs (93) and/or at least two ribs (111) are connected to one another by means of at least one connecting section (95, 96, 112, 113, 114) extending in the conveying direction (V).

12. Feed unit according to claim 10 or 11, **characterized in that** two adjacent stiffening ribs (93) are connected to each other by means of a flange (94), and that a vibration element (100), preferably a spring, is connected to the flange (94).

13. Feed unit according to one of the claims 1 to 12, **characterized in that** two hollow profile sections are provided which are arranged at a distance from one another transversely to the conveying direction (V).

14. Feed unit according to claim 12, **characterized in that** the component width (B) extending transversely to the conveying direction (V), which results from the width of the two hollow profiles plus the width of the distance between the hollow profiles, is at least 70% of the width (C) of the holder (140) in this direction.

15. Mobile crushing or screening plant with a feed unit according to any one of claims 1 to 14.

## Revendications

1. Unité d'alimentation pour une installation de traitement, en particulier pour une installation de concassage ou de criblage, avec une goulotte d'alimentation qui présente un support de goulotte (90), le support de goulotte (90) présentant un fond (92), le fond (92) s'étendant dans la direction de transport (V) de la goulotte d'alimentation, au moins une porteuse (130) s'étendant dans la direction de transport (V) étant disposé dans la zone de la face inférieure du fond (92), qui supporte le fond (92), dans lequel il est en outre prévu un support (140) qui porte au moins un excitateur de vibrations (150) d'un dispositif d'excitation, dans lequel le dispositif d'excitation génère une vibration dans une direction d'excitation au moyen de l'au moins un excitateur de vibrations, et dans lequel la porteuse (130) est relié au support (140),
**caractérisée en ce**
**que** la porteuse (130) forme un profilé creux fermé ou qu'au moins une partie de la paroi de la porteuse (130) forme un profilé creux fermé avec un profilé de renforcement (120) qui lui est relié
et **que** le profil creux s'étend avec une déviation angulaire de l'ordre de +/-15° dans la direction de la direction d'excitation.

2. Unité d'alimentation selon la revendication 1, **caractérisée en ce que** le profilé creux a une section d'extrémité (128, 129) à chacune de ses extrémités longitudinales, et **en ce que** le profilé creux est relié par sa première section d'extrémité (128) à la base (92) et par sa seconde section d'extrémité (129) au support (140).

3. Unité d'alimentation selon la revendication 1 ou 2, **caractérisée en ce que** le profilé creux s'étend sous un angle (a) inférieur à 90° par rapport à la direction de transport ou au fond (92), l'angle étant formé en particulier comme un angle aigu dans la gamme entre 20° et 50°, de préférence dans la gamme entre 25° et 35°, en particulier 30°.

4. Unité d'alimentation selon l'une des revendications 1 à 3, **caractérisée en ce qu'**au moins un élément de raidissement (129.1, 129.2) est disposé dans la zone de la section d'extrémité (129) du profilé creux tournée vers le support (140), l'élément de raidissement (129.1, 129.2) étant relié aussi bien à l'extérieur du profilé creux qu'au support (140), et **en ce que** l'élément de raidissement (129.1, 129.2) dépasse latéralement, au moins par zones, de la circonférence extérieure du profilé creux.

5. Unité d'alimentation selon l'une quelconque des revendications 1 à 4, **caractérisée en ce que** la porteuse (130) présente un élément de paroi (134) auquel sont reliés deux écarteurs (122, 127) du profilé creux, et **en ce que** les écarteurs (122, 127) maintiennent une section de profilé (120A) du profilé creux à distance de l'élément de paroi (134).

6. Unité d'alimentation selon la revendication 5, **caractérisée en ce que** l'élément de paroi (134) et/ou la section de profilé (120A) présente un évidement qui est de préférence approfondi vers l'espace intérieur enfermé par le profilé creux.

7. Unité d'alimentation selon l'une des revendications 5 ou 6, **caractérisée en ce qu'**un élément de paroi (123, 126) est relié à chacune des deux écarteurs (122, 127), les deux éléments de paroi (123, 126) faisant un angle entre eux.

8. Unité d'alimentation selon la revendication 7, **caractérisée en ce que** les deux éléments de paroi (123, 126) sont reliés l'un à l'autre par l'intermédiaire d'au moins une section de liaison (124, 125), et dans laquelle il est de préférence prévu deux sections de liaison (124, 125) qui sont disposées en angle l'une par rapport à l'autre.

9. Unité d'alimentation selon l'une des revendications 1 à 8, **caractérisée en ce que** le profilé de renforcement (120) forme un composant qui est placé sur une surface latérale de l'élément de paroi (134) de la porteuse (130) et est soudé à celui-ci, les cordons de soudure s'étendant dans la direction de l'extension longitudinale du profilé creux.

10. Unité d'alimentation selon l'une quelconque des revendications 1 à 9, **caractérisée en ce que** des nervures (111) sont disposées sur la face inférieure du fond (92) et s'étendent transversalement à la direction de transport (V), et **en ce que** les nervures (111) sont reliées, de préférence soudées, à la face extérieure du profilé creux et/ou **en ce que** des nervures de renforcement (93) sont disposées sur la face inférieure du fond (92) et s'étendent transversalement à la direction de transport (V).

11. Unité d'alimentation selon la revendication 10, **caractérisée en ce qu'**au moins deux nervures de raidissement (93) et/ou au moins deux nervures (111) sont reliées entre elles au moyen d'au moins une section de liaison (95, 96, 112, 113, 114) s'étendant dans la direction de transport (V).

12. Unité d'alimentation selon la revendication 10 ou 11, **caractérisée en ce que** deux nervures de raidissement adjacentes (93) sont reliées l'une à l'autre au moyen d'une bride (94), et **en ce qu'**un élément de vibration (100), de préférence un ressort, est relié à la bride (94).

13. Unité d'alimentation selon l'une des revendications 1 à 12, **caractérisée en ce qu'**il est prévu deux profilés creux qui sont disposés à distance l'un de l'autre transversalement à la direction de transport (V).

14. Unité d'alimentation selon la revendication 12, **caractérisée en ce que** la largeur du composant (B) s'étendant transversalement à la direction de transport (V), qui résulte de la largeur des deux profilés creux plus la largeur de la distance entre les profilés creux, est au moins égale à 70% de la largeur (C) du support (140) dans cette direction.

15. Installation mobile de concassage ou de criblage comportant une unité d'alimentation selon l'une quelconque des revendications 1 à 14.
